# EUROPEAN PATENT APPLICATION

(11) **EP 4 491 862 A1**
(43) Date of publication of application: **15.01.2025**
(21) Application number: 24185006.4
(22) Date of filing: 27.06.2024
(51) Int. Cl.: F02D 41/22, F02D 35/02, F02N 11/00, G01M 15/08, F02D 41/00

(54) **METHOD FOR ADJUSTING A VALVE LASH AND MONITORING WEAR OF A VALVE DURING ENGINE START AND VALVE ASSEMBLY**

(30) Priority: 14.07.2023 GB 202310817
(71) Applicant: Caterpillar Energy Solutions GmbH, 68167 Mannheim (DE)
(72) Inventor: GUISASOLA, Inigo, 68167 Mannheim (DE); BERGER, Olaf, 68167 Mannheim (DE)
(74) Representative: Nordmeyer, Philipp Werner

(57) **Abstract**

The present invention pertains to a method (1) for adjusting a valve lash (234) and/or monitoring wear of a valve in an internal combustion engine. The method (1) comprises the steps of rotating (S1) the engine by an engine starter (4), measuring (S2) a parameter indicative of a gas pressure in the engine while rotating the engine, determining (S3) a corresponding parameter profile based on the measured parameter indicative of the gas pressure in the engine and adjusting (S4) the valve lash and/or monitoring wear of the valve (23) based on the determined parameter profile. Furthermore, a valve assembly (2) suitable for carrying out the method according to the present disclosure may be provided, comprising at least one sensor device (5) and a control unit (3) communicatively coupled to the at least one sensor device (5).

## Description

### Technical Field

The present invention pertains to a method for adjusting a valve lash and monitoring wear of a valve in an internal combustion engine. Further, it pertains to an associated valve assembly for adjusting a valve lash and monitoring wear of a valve of an internal combustion engine.

### Technological Background

The proper operation of intake and exhaust valves of an internal combustion engine are of crucial importance for the performance and efficiency of the engine. In particular, the proper sealing of a cylinder head by valve plates of the valves pressing against their valve seats during the combustion cycle as well as the right timing of the valves being opened and closed by the cams of the camshaft during the load cycle are of utmost importance. Therefore, it is required that the valves and cams are dimensioned accurately and that the valves do not show excessive wear to ensure proper performance of the engine.

However, due to the high temperatures present during operation of the engine, the intake and exhaust valves, in particular valve shafts, are prone to wear on the one hand and also to thermal expansion resulting in an elongation of the valves on the other. As a consequence of both wear and thermal expansion, the valves may no longer close completely as they may no longer abut properly on their associated valve seat. Also, if the valve seat wears faster than the cam, the valve may no longer close completely.

In case of an improper sealing, there is a risk of the valve seat and the valve plate burning because hot combustion gases may flow past the valve and it can hardly dissipate any heat to the cylinder head. Because of the gases flowing through, there is also a loss of power, since the part of the combustion gas that escapes past the valve does not transfer its energy to the piston.

To ensure that the valve closes reliably despite its thermal expansion, a valve lash is provided. The valve lash is a small gap somewhere in the valve train, e.g. between a rocker arm being actuated by a cam of a camshaft and the valve shaft. The valve lash decreases as the operating temperature is reached, but it must not become zero. A valve lash being too large, on the other hand, causes loss of power, strong noise development and increased wear of the valve train.

In order to prevent engine damage or loss of efficiency, a properly adjusted valve lash as well as valves having low wear are critical. Thus, methods have been developed to measure the performance of an engine and deriving therefrom whether the valve lash is properly adjusted or not. Further, similar methods are used to monitor wear of a valve. However, prior methods and devices to adjust the valve lash and/or monitor wear of a valve are based on measurements performed during an active combustion cycle of the engine, potentially leading to engine damage or loss of efficiency.

### Summary of the Invention

Starting from the prior art, it is an objective to provide an improved method and valve assembly to adjust a valve lash and/or monitor wear of a valve.

This objective is solved by means of a method for adjusting a valve lash and/or monitoring valve wear in an internal combustion engine with the features of claim 1 and a valve assembly for adjusting a valve lash and/or monitoring valve wear of an internal combustion engine with the features of claim 9. Preferred embodiments are set forth in the present specification, the Figures as well as the dependent claims.

Accordingly, a method for adjusting a valve lash and/or monitoring wear of a valve in an internal combustion engine is provided. The method comprises the steps of rotating the engine by an engine starter, measuring a parameter indicative of a gas pressure in the engine while rotating the engine, determining a corresponding parameter profile based on the measured parameter indicative of the gas pressure in the engine and adjusting the valve lash and/or monitoring the wear of the valve based on the determined parameter profile.

Furthermore, a valve assembly suitable for carrying out the method according to the present disclosure may be provided, comprising at least one sensor device and a control unit communicatively coupled to the at least one sensor device.

### Brief Description of the Drawings

The present disclosure will be more readily appreciated by reference to the following detailed description when being considered in connection with the accompanying drawings in which:
Fig. 1 schematically shows a flow chart of a method for adjusting a valve lash and/or monitoring wear of a valve according to an embodiment;
Fig. 2 shows a valve assembly within a section of a cylinder head with a bore configured to house a sensor device according to an embodiment and a sensor device according to an embodiment.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

The present disclosure is generally directed towards a method for adjusting a valve lash and monitoring wear of valve in an internal combustion engine before the engine is ignited and thus before the combustion cycle starts. More specifically, the method according to the invention is performed while the engine is rotated by an external engine starter, but has not been ignited yet.

The disclosure is based on the recognition of the inventors that the method of detecting an incorrectly adjusted valve lash or the monitoring of wear of a valve does not necessarily have to be performed while the combustion cycle of the engine is active, but rather that it is sufficient to run the internal combustion engine by an external engine starter without the need for combustion. In fact, the characteristic pressure profile when a piston of the internal combustion engine compresses and expands a gas during an engine cycle without combustion is sufficient to detect whether a corresponding valve lash is adjusted properly or not or whether a valve shows increased signs of wear.

For the sake of the present disclosure, the engine cycle may be divided into four stages, i.e. an intake stroke, a compression stroke, an expansion stroke and an exhaust stroke, which are well-known to a person skilled in the art.

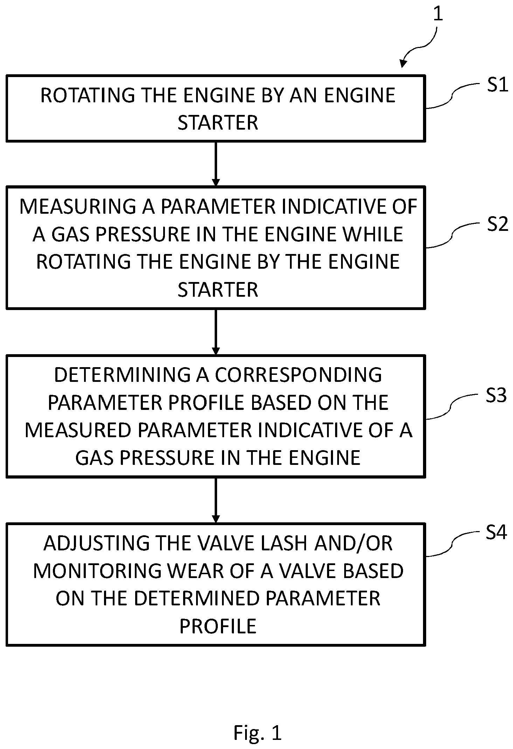

In Figure 1, a flow chart for a method 1 for adjusting a valve lash and/or monitoring wear of a valve in an internal combustion engine according to the present disclosure is illustrated. Therein, the method comprises the steps of rotating S 1 the engine by an engine starter, measuring S2 a parameter indicative of a gas pressure in the engine while rotating the engine by the engine starter, determining S3 a corresponding parameter profile based on the measured parameter indicative of the gas pressure in the engine and adjusting S4 the valve lash and/or monitoring wear of a valve based on the determined parameter profile.

In the context of the present disclosure, a method for adjusting a valve lash may be understood as a method to adjust a valve lash to ensure the highest possible performance and/or efficiency of the engine. A method for monitoring wear of a valve may be understood as a method to detect whether a valve in an engine shows excessive wear thus requiring it to be replaced with a new valve or to use the information about the wear of the valve to plan the next service inspection of the engine.

In step S 1, the engine is rotated by an external engine starter. The rotation of the engine may refer to the rotation of a crankshaft so as to transform the rotational motion into a translational motion of one or more pistons residing in one or more cylinders of the engine.

The engine starter is not limited to a particular type of engine. According to embodiments of the present disclosure, the engine starter may be a pneumatic, hydraulic, electric or another internal combustion engine. Any other means suitable to drive the rotation of an internal combustion engine also fall within the scope of the present invention.

According to an embodiment, the engine starter may be configured to rotate the engine to a predetermined rotational speed. The rotational speed may be set by an operator operating the engine starter. The rotational speed may refer to the rotational speed of the crankshaft of the engine. The rotational speed of the engine starter and the engine may be identical or may be different from each other, but may have a direct correlation to each other - e.g. by means of a transmission or gearbox between the engine starter and the engine.

In step S2, a parameter indicative of a gas pressure in the engine is measured while the engine is rotated by the engine starter. Measuring the parameter may refer to any method suitable to sense such parameter in the engine.

According to some embodiments of the invention, the parameter indicative of a gas pressure in the engine may be a temperature of the gas or a pressure of the gas.

In the case of the parameter indicative of a gas pressure in the engine being a temperature of the gas or any other parameter indicative of the gas pressure which is not the gas pressure itself, a person skilled in the art may derive the pressure of the gas therefrom. In the context of the present disclosure, it is however not necessary to derive the actual gas pressure from the parameter indicative of a gas pressure in the engine. Rather, it is sufficient to know that the measured parameter is suitable to indicate the qualitative behavior of the gas pressure in the engine.

The gas pressure being measured in the engine may refer to the pressure of any volume of gas present in a combustion chamber of the engine and/or a receiving pipe and/or an exhaust pipe of the engine. In general, the present disclosure encompasses any volume of gas present in the engine that is directly or indirectly affected by a compression or expansion induced by the translational movement of one or more pistons due to the rotation of the engine by the engine starter.

Measuring the parameter indicative of a gas pressure in the engine according to the invention is performed while rotating the engine by the engine starter. In the context of the present disclosure, this entails that the measurement is performed before the combustion cycle and/or the ignition of the engine starts.

Accordingly, the measurement may be performed during the engine cycle, i.e. during the compression/expansion stroke as well as the intake/exhaust stroke, but without any combustion. The pressure of the gas may change during the compression and expansion stroke of the piston when the valves are closed as well as during the gas intake and exhaust stroke when the valves are opened. Hence, incorrect timing of the valves being opened and/or closed may lead to a considerably different behavior of the gas pressure, temperature and/or other parameters indicative of a gas pressure in the engine. According to some embodiments, the gas pressure of the engine may be measured in the combustion chamber of the engine and/or the receiving pipe and/or the exhaust pipe of the engine.

Since there is no ignition of the gas in the combustion chamber, the gas in the engine may be given by any gas as long as it does not lead to self-ignition during compression of the gas. For example, the gas may be given by air or a mix of air and natural gas or a mix of air and fuel.

In the context of the present disclosure, the measurement of the parameter indicative of a gas pressure in the engine may be performed multiple times during an engine cycle. For example, it may be performed in regular or irregular time intervals across an engine cycle. It may also be performed over only a part of an engine cycle. Alternatively, it may also be performed at only a single point in time during an engine cycle, preferably at a characteristic point in time such as when the piston of the engine reaches a dead center during a stroke.

According to an embodiment, the measurement of the parameter indicative of a gas pressure in the engine may be performed over at least one engine cycle. This means that the measurement may be performed over the course of one or more engine cycles, wherein one or multiple values of the parameter indicative of the gas pressure may be measured at predetermined points in time during one or more engine cycles.

In preferred embodiments, the measurement of the parameter indicative of a gas pressure in the engine may be performed over 100 engine cycles, preferably over 10 engine cycles, especially preferred over one engine cycle.

In step S3, a parameter profile based on the measured parameter indicative of the gas pressure in the engine is determined. The parameter profile may refer to a dataset containing at least one measured value of the parameter indicative of a gas pressure, wherein the at least one value in the dataset is associated with a certain point in time during the engine cycle. Preferably, the parameter profile illustrates the behavior of the parameter indicative of a gas pressure over the course of one or more engine cycles or part of one or more engine cycles by a multitude of values recorded during one or more engine cycles.

If more than one engine cycle is used for measuring values of the parameter indicative of a gas pressure in the engine, the parameter profile may be determined by averaging the measured values associated with a certain point in an engine cycle over the number of engine cycles over which the measurement is performed. Hence, the more engine cycles are used for performing the measurement, the more accurate the determined parameter profile during an engine cycle may be, but the more time the measurement may consume.

In step S4, the valve lash is adjusted and/or the wear of a valve is monitored based on the determined parameter profile. In the context of the present disclosure, adjusting the valve lash refers to any change of the valve lash being performed on the basis of the determined parameter profile. Preferably, the valve lash is adjusted in a way in which performance and/or efficiency of the associated engine is enhanced. Monitoring the wear of a valve refers to recording the change of wear of one or a multitude of valves over time based on the determined parameter profile. Preferably, the information gained therefrom is used to determine whether a valve requires to be replaced with a new valve or to plan the next service inspection of the engine.

According to an embodiment of the invention, the method for adjusting a valve lash and/or monitoring wear of a valve comprises a step of calculating a parameter difference profile based on the measured parameter profile and a reference parameter profile.

Generally, the reference parameter profile may refer to a parameter profile consisting of one or more parameters indicative of a gas pressure in the engine during one or more engine cycles that is based on an engine with a properly adjusted valve lash and/or an engine having valves with insignificant or no wear. According to some embodiments, the reference parameter profile may be determined from the gas pressure in the combustion chamber and/or the receiver pipe and/or the exhaust pipe of the engine.

According to a preferred embodiment, the reference parameter profile may be determined by calculating a parameter profile based on an appropriate numerical and/or analytical model of a cylinder with a correctly adjusted valve lash and/or a cylinder with valves showing insignificant or no wear. Such calculation may be performed by a computer simulation that simulates the gas pressure or any other parameter indicative of a gas pressure in an engine during one or more engine cycles while the engine is rotated by an engine starter. With regard to the valve lash adjustment method, the simulated engine performance and/or efficiency is optimized regarding the valve opening and closing times during the engine cycle.

According to another preferred embodiment, the reference parameter profile may be determined by measuring a parameter profile based on at least one cylinder having a valve lash that is known to be correctly adjusted and/or a cylinder having valves that are known to exhibit insignificant or no wear. For example, a further structurally identical engine from which it is known to have a properly adjusted valve lash and/or wear-free valves and thus known to perform properly could be used to measure such reference parameter profile. Further, in an engine having at least two cylinders, a reference parameter profile may be determined by determining a parameter profile of one or more of those cylinders with a properly adjusted valve lash and/or wear free valves.

The parameter difference profile may be calculated by subtracting the reference parameter profile by the determined parameter profile. In particular, the parameter difference profile may be calculated from the parameter profile determined from the cylinder under test and the reference parameter profile determined according to embodiments specified above.

According to a preferred embodiment, the valve lash may be correctly adjusted and/or a valve may be replaced with a wear-free valve or the next service inspection of the engine may be planned if the calculated parameter difference profile exceeds a threshold profile.

The threshold profile may represent a dataset containing at least one value associated with a certain point in time during an engine cycle, wherein the values in the dataset define threshold values which the values of the parameter difference profile may not exceed in order to provide a proper performance and/or efficiency of the engine. If, however, the values of the parameter difference profile do exceed the values of the threshold profile, the valve lash may be adjusted in order to restore proper performance and/or efficiency of the engine. Additionally or alternatively, if the values of the parameter difference profile exceed the values of the threshold profile, it may be indicated that one or more valves in the engine exhibit increased or excessive wear, such that it may be required to replace the valve with a wear-free valve or plan the next service inspection of the engine in a timely manner.

According to an embodiment, the threshold profile may be comprised of just one threshold value associated with a certain point in time during the engine cycle. In that case, the value of the parameter difference profile associated with the same point in time during the engine cycle as the threshold value may be compared to the threshold value. If the value of the parameter difference profile exceeds the corresponding value of threshold profile, the valve lash may be adjusted to restore proper performance and efficiency of the engine. Additionally or alternatively, it may be indicated that one or more valves in the engine exhibit increased or excessive wear, such that it may be required to replace the valve with a wear-free valve or plan the next service inspection of the engine in a timely manner.

In a preferred embodiment, a parameter difference profile determined over one or more complete engine cycles or a part of one or more engine cycles may be compared to a corresponding threshold profile. If the determined parameter difference profile exceeds the threshold profile, the valve lash may be adjusted and/or it may be indicated that one or more valves in the engine exhibit increased or excessive wear, such that it may be required to replace the valve with a wear-free valve or plan the next service inspection of the engine in a timely manner.

According to some embodiments, the comparison of a parameter difference profile and a threshold profile may involve the comparison a multitude of values with each other. It is noted that if among such multitude of values only a small amount of values associated with the parameter difference profile exceed the values associated with the threshold profile, there might not be a need to adjust the valve lash and/or replace a valve or plan a service inspection. It is however within the general knowledge and skill of a person skilled in the art to decide whether the valve needs adjusting based on a comparison of the parameter difference profile and the reference parameter profile. Appropriate mathematical methods may be used to decide whether the threshold profile exceeds a corresponding parameter difference profile such that adjusting the valve lash and/or replacing a valve or plan a service inspection is reasonable.

In the following, a valve assembly configured to implement the method for adjusting a valve lash and/or monitoring wear of a valve according to the invention will be described.

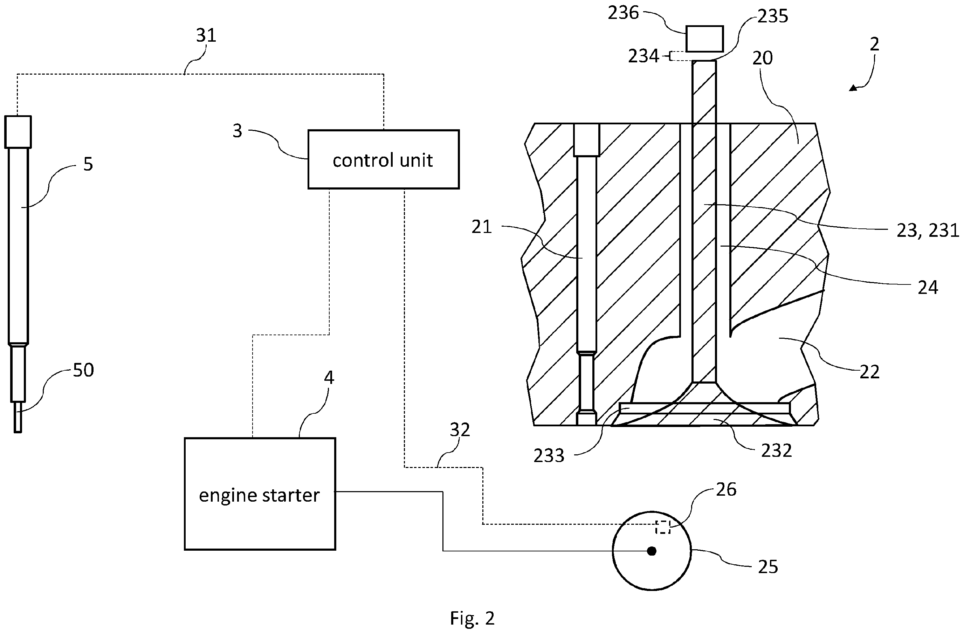

Figure 2 schematically illustrates a valve assembly 2 of an engine, comprising a control unit 3, an engine starter 4 and a sensor device 5 in accordance with an embodiment of the invention. The valve assembly 2 comprises a cylinder head 20 with a bore 21 for housing the sensor device 5, a receiver/exhaust pipe 22 that is configured to supply/exert gas into/from the combustion chamber via a valve 23.

The valve 23 is comprised of a valve shaft 231 and a valve plate 232 on its lower end and is arranged inside a valve guide 24 within the cylinder head 20. The valve plate 232 is configured to seal the combustion chamber against the receiver/exhaust pipe 22 by being pressed against a valve seat 233. Between an upper end 235 of the valve shaft 231 and a valve actuator 236 a valve lash 234 is arranged.

According to the present disclosure, the control unit 3 is communicatively coupled to the sensor device 5, wherein the control unit 3 is configured to rotate the engine via the engine starter 4. The control unit 3 may for example be communicatively coupled to the engine starter 4 such that the control unit 3 can send a command to start the engine starter 4.

The rotation of the engine may refer to the rotation of a crankshaft 25 so as to transform the rotational motion into a translational motion of one or more pistons residing in one or more cylinders of the engine.

According to some embodiments of the present disclosure, the engine starter 4 may be a pneumatic, hydraulic, electric or another internal combustion engine.

According to an embodiment of the invention, the engine starter 4 may be configured to rotate the engine to a predetermined rotational speed 32 measured by a rotation sensor 26 arranged in the engine, for example on the crankshaft 25. Alternatively, the rotation sensor 26 may be arranged on the engine starter 4. In any case, the rotation sensor 26 may be communicatively coupled to the control unit 3 so as to transmit the rotational speed 32 to the control unit 3 for further processing.

According to the present disclosure, the control unit 3 is further configured to detect a parameter indicative of a gas pressure in the engine by the sensor device 5 while the engine is rotated by the engine starter 4. Detecting the parameter may refer to any method suitable to sense such parameter in the engine via a suitable sensor device 5.

According to some embodiments of the present disclosure, the parameter indicative of a gas pressure in the engine may be a temperature 31 of the gas or a pressure of the gas. Correspondingly, the parameter indicative of a gas pressure in the engine may be detected via the control unit 3 with a sensor device 5 embodied by a temperature sensor or a pressure sensor. In particular, the sensor device 5 may be a thermocouple to measure a temperature 31 of the gas in the engine as particularly illustrated in Figure 2.

According to an embodiment of the present disclosure, the sensor device 5 may be arranged in a bore 21 within the cylinder head 20, such that a measuring tip 50 of the sensor device 5 is arranged in or adjacent to a combustion chamber of the engine. Alternatively, the sensor device 5 may be arranged in a receiver/exhaust pipe 22 of the engine.

Detecting via the control unit 3 the parameter indicative of a gas pressure in the engine via the sensor device 5 may be performed while rotating the engine by the engine starter 4. In the context of the present disclosure, this entails that the measurement is performed before the combustion cycle and/or the ignition of the engine starts.

The detection via the control unit 3 of the parameter indicative of a gas pressure in the engine via the sensor device 5 may be performed in accordance with the method described with regard to Figure 1.

According to an embodiment, the detection via the control unit 3 of the parameter indicative of a gas pressure in the engine via the sensor device 5 may be performed over at least one engine cycle. This means that the detection may be performed over the course of one or more engine cycles, wherein one or multiple values of the parameter indicative of the gas pressure may be detected at predetermined points in time during one or more engine cycles.

In preferred embodiments, the detection via the control unit 3 of the parameter indicative of a gas pressure in the engine via the sensor device 5 may be performed over 100 engine cycles, preferably over 10 engine cycles, especially preferred over one engine cycle.

According to the invention, the control unit 3 is further configured to determine a parameter profile based on the detected parameter indicative of the gas pressure in the engine. The control unit 3 may be configured to determine the parameter profile in accordance with the method described with respect to Figure 1.

According to the invention, the control unit 3 is further configured to adjust the valve lash 234 and/or monitor wear of the valve based on the determined parameter profile.

According to an embodiment of the invention, the control unit 3 performs an additional step of calculating a parameter difference profile based on the measured parameter profile and the reference parameter profile. The control unit 3 may be configured to determine the reference parameter profile in accordance with the method described with respect to Figure 1.

According to a preferred embodiment, the control unit 3 may be configured to determine the reference parameter profile by calculating a parameter profile based on an appropriate numerical and/or analytical model of a cylinder with a correctly adjusted valve lash 234 and/or a cylinder with valves showing insignificant or no wear. Such calculation may be performed by a computer simulation that simulates the gas pressure or any other parameter indicative of a gas pressure in an engine during an engine cycle while the engine is rotated by the engine starter 4. With regard to adjusting the valve lash 234, the simulated engine performance and/or efficiency is optimized regarding the opening and closing times of the valve 23 during the engine cycle. The control unit 23 may have stored such calculated reference parameter profile in a memory or use a lookup table having stored reference parameter profiles for a variety of different engines/cylinders.

According to another preferred embodiment, the control unit 3 may be configured to determine a reference parameter profile by determining a parameter profile based on at least one cylinder having a valve lash 234 that is known to be correctly adjusted and/or a cylinder having a valves that are known to exhibit insignificant or no wear . For example, the control unit 3 may determine a parameter profile from a structurally identical engine from which it is known to have a properly adjusted valve lash 234 and/or wear-free valves and thus known to perform properly, which may then be used as a reference parameter profile. Further, in an engine having at least two cylinders, a reference parameter profile may be determined by the control unit 3 by detecting parameter profiles one or more of those cylinders with a properly adjusted valve lash 234 and/or wear-free valves.

The parameter difference profile may be calculated by the control unit 3 by subtracting the reference parameter profile by the determined parameter profile. In particular, the parameter difference profile may be calculated from the parameter profile determined from the cylinder under test and the reference parameter profile determined according to embodiments specified above.

According to a preferred embodiment, the valve lash 234 may be correctly adjusted via the control unit 3 if the calculated parameter difference profile exceeds a threshold profile. Additionally or alternatively, it may be indicated that the valve should be replaced with a wear-free valve or it may be indicated when the next service inspection of the engine should be via the control unit 3 if the calculated parameter difference profile exceeds a threshold profile. The threshold profile and the calculation of the parameter difference profile may be performed by the control unit 3 in accordance with the method described with regard to Figure 1.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

### Industrial Applicability

The method for adjusting a valve lash and/or monitoring wear of a valve according to the present disclosure is suitable for being used in internal combustion engines having valves, particularly in gas engines. The method for adjusting a valve lash as well as the method for monitoring wear of a valve generally aims at improving a valve lash adjustment and valve wear monitoring to avoid damaging effects to the engine and improve performance and/or efficiency of the engine.

To address this, a method for a valve lash in an internal combustion engine is provided, comprising the steps of rotating the engine by an engine starter, measuring a parameter indicative of a gas pressure in the engine while rotating the engine, determining a corresponding parameter profile based on the measured parameter indicative of the gas pressure in the engine and adjusting the valve lash and/or monitoring wear of a valve based on the determined parameter profile. Furthermore, a valve assembly suitable for carrying out the method according to the present disclosure is provided, comprising at least one sensor device and a control unit communicatively coupled to the at least one sensor device.

In the following, various advantageous effects according to the invention and according to preferred embodiments are disclosed. The advantages refer to the method for adjusting a valve lash/monitoring wear of a valve as well as to the valve assembly according to the invention.

Performing the measurement of the parameter indicative of a gas pressure in the engine while rotating the engine by an engine starter according to the invention implies that the measurement is performed before the engine is ignited and before the combustion cycle starts. Accordingly, the valve lash can be adjusted and excessively worn valves may be replaced or a service inspection may be planned before the engine operates in its nominal condition. This avoids the engine to be operated with an improper adjusted valve lash and/or valves with increased wear and thus avoids damaging effects to the engine associated with improper adjusted valve lashes and/or valves with increased wear. Damaging effects may include burning of the valves or other parts of the cylinder head being exposed to unusual large amounts of heat. Rotating the engine by the engine starter further offers the advantage that no natural gas or fuel is needed to measure the parameter indicative of the gas pressure. Instead, the engine may simply use the ambient air to perform the measurement.

According to a preferred embodiment, the engine starter may rotate the engine to a predetermined rotational speed. The rotational speed may be used to further improve the adjustment of the valve lash and/or monitoring wear of the valve according to the invention. This is because the parameter profile and the reference parameter profile may be dependent on the rotational speed of the engine. Accordingly, it may be advantageous to determine the rotational speed of the engine and/or the engine starter so as to improve the valve lash adjustment and/or monitoring of the wear of the valve.

For example, the control unit may be configured to set a predetermined rotational speed for the engine starter and/or receive a rotational speed from the rotational speed sensor and determine a reference parameter profile based on the set or received rotational speed.

According to a preferred embodiment, the parameter indicative of a gas pressure in the engine is given by a temperature. Therefore, the sensor device used in the valve assembly of the present invention may be a thermocouple. Thermocouples and other temperature sensors are already comprised in many combustion engines, especially gas engines. Thus, using the temperature as a parameter indicative of a gas pressure in the engine and a corresponding temperature sensor might be advantageous as it simplifies the implementation of the present invention.

According to a further embodiment, the parameter indicative of a gas pressure is measured in or adjacent to the combustion chamber of the engine and/or within the receiver pipe and/or the exhaust pipe of the engine. For this purpose, the valve assembly of the present invention may comprise sensor devices arranged in or adjacent to the combustion chamber of the engine and/or within the receiver pipe and/or the exhaust pipe of the engine.

Arranging a sensor device in a receiver and/or an exhaust pipe of the engine may be advantageous since it avoids the need of a sensor device in or adjacent to the combustion chamber. The latter may be disadvantageous since the combustion in the combustion chamber may be negatively affected by a sensor device arranged therein or adjacent to it. On the other hand, arranging a sensor device in a receiver and/or exhaust pipe might deteriorate the gas intake and/or gas emission into and/or from the combustion chamber. Thus, arranging the sensor device in the combustion chamber may be advantageous from this point of view. In general, the present embodiment provides versatility with regard to where the sensor device can be placed while still being able to adjust the valve lash/monitor wear of valves before the combustion of the engine starts.

According to a further embodiment, the measurement of the parameter indicative of a gas pressure is performed over at least one engine cycle, in particular over 100 engine cycles, preferably over 10 engine cycles, especially preferred over 1 engine cycle. Performing the measurement over only a small amount of engine cycles accelerates the measurement procedure and thus improves the present method for adjusting a valve lash/monitoring wear of valves and valve assembly.

In a further preferred embodiment, the method comprises a step of calculating a parameter difference profile based on the determined parameter profile and the reference parameter profile. Further, the control unit of the valve assembly is configured to calculate a parameter difference profile based on the determined parameter profile and the reference parameter profile.

In particular, the reference parameter profile may be determined by measuring a parameter profile based on at least one cylinder having a valve lash that is known to be correctly adjusted and/or a valve showing insignificant or no wear, and/or by calculating a parameter profile based on an appropriate numerical and/or analytical model of a cylinder with a correctly adjusted valve lash and/or a valve showing insignificant or no wear.

Using the parameter difference profile in accordance with the embodiments above, the valve lash may be adjusted if the calculated parameter difference profile exceeds a threshold profile. Additionally or alternatively, by monitoring the wear of a valve it may be indicated that the valve should be replaced with a wear-free valve or it may be indicated when the next service inspection of the engine should be if the calculated parameter difference profile exceeds a threshold profile. By virtue of this embodiment, the method may be implemented based on a quantitative condition that defines whether a valve lash needs adjusting and/or whether a valve requires to be replaced or whether a service inspection should be planned. Accordingly, the method according to this embodiment provides a precise and reliable method of adjusting a valve lash and/or monitoring wear of a valve.

Further, by the provision of a method for adjusting a valve lash/monitoring wear of a valve and a valve assembly according to the present disclosure, an existing combustion engine, or combustion engine infrastructure may be upgraded without introducing substantial changes to the engine.

## Claims

1. Method (1) for adjusting a valve lash (234) and/or monitoring wear of a valve (23) in an internal combustion engine, the method comprising the steps of:
- rotating (S 1) the engine by an engine starter (4);
- measuring (S2) a parameter indicative of a gas pressure in the engine while rotating the engine by the engine starter (4),
- determining (S3) a parameter profile based on the measured parameter indicative of the gas pressure in the engine;
- adjusting (S4) the valve lash (234) and/or monitoring wear of the valve (23) based on the determined parameter profile.

2. Method (1) according to claim 1, wherein the engine starter (4) is a pneumatic, hydraulic, electric or a further internal combustion engine, wherein the engine starter (4) rotates the engine to a predetermined rotational speed (32).

3. Method (1) according to any of the previous claims,
wherein the parameter indicative of a gas pressure is given by a temperature (31) and/or a pressure of the gas.

4. Method (1) according to any of the previous claims,
wherein the parameter indicative of a gas pressure is measured (S2) in or adjacent to a combustion chamber of the engine and/or within a receiver pipe (22) and/or an exhaust pipe (22) of the engine.

5. Method (1) according to any of the previous claims,
wherein the measurement (S2) of the parameter indicative of a gas pressure is performed over at least one engine cycle, in particular over 100 engine cycles, preferably over 10 engine cycles, especially preferred over 1 engine cycle.

6. Method (1) according to any of the previous claims,
wherein the method comprises a step of calculating a parameter difference profile based on the determined parameter profile and a reference parameter profile.

7. Method (1) according to claim 6, wherein the reference parameter profile is determined by measuring a parameter profile based on at least one cylinder having a valve lash that is known to be correctly adjusted and/or having a valve showing insignificant or no wear
and/or
by calculating a parameter profile based on an appropriate numerical and/or analytical model of a cylinder with a correctly adjusted valve lash and/or a cylinder with a valve showing insignificant or no wear.

8. Method (1) according to claims 6 or 7, wherein the valve lash (234) is adjusted and/or the valve is replaced with a wear-free valve or the next service inspection of the engine is planned if the calculated parameter difference profile exceeds a threshold profile.

9. Valve assembly (2) for adjusting a valve lash (234) and/or monitoring wear of a valve (23) in an internal combustion engine according to any of claims 1 to 8, comprising a control unit (3) communicatively coupled to a sensor device (5), wherein the control unit (3) is configured to:
- detect the parameter indicative of the gas pressure in the engine by the sensor device arranged in the engine;
- determine the corresponding parameter profile based on the detected parameter indicative of the gas pressure in the engine;
- adjust the valve lash (234) and/or monitor wear of the valve (23) based on the determined parameter profile.

10. Valve assembly (2) according to claim 9, wherein the rotational speed (32) of the engine is maintained by the engine starter (4) and measured by a rotational speed sensor (26) communicatively coupled to the control unit (3), wherein the engine starter (4) is a pneumatic, hydraulic, electric or a further internal combustion engine.

11. Valve assembly (2) according to claims 9 or 10, wherein the at least one sensor device (5) is a temperature sensor and/or a pressure sensor, preferably a thermocouple.

12. Valve assembly (1) according to any of claims 9 to 11,
wherein the at least one sensor device (5) is arranged in or adjacent to the combustion chamber of the engine and/or within the receiver pipe (22) and/or the exhaust pipe (22) of the engine.

13. Valve assembly (1) according to any of claims 9 to 12,
wherein the control unit (3) is configured to detect the parameter indicative of a gas pressure in the engine by the sensor device (5) over at least one engine cycle, in particular over only 100 engine cycles, preferably over only 10 engine cycles, especially preferred over only 1 four-stroke engine cycle.

14. Valve assembly (2) according to any of claims 9 to 13,
wherein the control unit (3) is configured to calculate the parameter difference profile based on the measured parameter profile and the reference parameter profile.

15. Valve assembly (2) according to claim 14, wherein the control unit (3) is configured to determine the reference parameter profile by measuring via the sensor device (5) a parameter profile based on at least one cylinder having a valve lash (234) that is known to be correctly adjusted and/or having a valve showing insignificant or no wear
and/or
by storing a parameter profile based on an appropriate numerical and/or analytical model of a cylinder with a correctly adjusted valve lash (234) and/or a cylinder with a valve showing insignificant or no wear.

16. Valve assembly (2) according to claims 14 or 15, wherein the control unit (3) is configured to adjust the valve lash (234) and/or to indicate that a replacement of the valve (23) with a wear-free valve is required or to indicate when the next service inspection of the engine is required if the calculated parameter difference profile exceeds the threshold profile.
